# EUROPEAN PATENT SPECIFICATION

(11) **EP 3 703 424 B1**
(45) Date of publication and mention of the grant of the patent: **11.08.2021**
(21) Application number: 17932725.9
(22) Date of filing: 24.11.2017
(51) Int. Cl.: H04W 48/08, H04W 8/22, H04W 72/04, H04W 74/00

(54) **RANDOM ACCESS AND SPECTRUM REPORTING METHODS, TERMINAL DEVICE, AND NETWORK DEVICE**
DIREKTZUGRIFFS UND SPEKTRUMSBERICHTERSTATTUNGSVERFAHREN, ENDGERÄT UND NETZWERKVORRICHTUNG
PROCÉDÉS D'ACCÈS ALÉATOIRE ET DE RAPPORT DE SPECTRE, ÉQUIPEMENT TERMINAL ET DISPOSITIF RÉSEAU

(43) Date of publication of application: 02.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Penza, Giancarlo
(86) International application number: PCT/CN2017/112941
(87) International publication number: WO 2019/100340

(56) References cited:
- WO-A1-2006/130318
- CN-A- 1 956 356
- CN-A- 104 871 449
- US-A1- 2011 122 801
- US-A1- 2013 053 103
- PANASONIC: "On default bandwidth part", 3GPP DRAFT; R1-1710787, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao; 20170627 - 20170630 15 June 2017 (2017-06-15), XP051304194, Retrieved from the Internet: URL:http://www.3gpp.org/ftp/tsg_ran/WG1_RL 1/TSGR1_AH/NR_AH_1706/Docs/ [retrieved on 2017-06-15]

## Description

### Technical Field

Implementations of the present disclosure relate to the field of communication, and more particularly, to methods for random access and for reporting a spectrum, a terminal device and a network device.

### Background

With people's pursuit of rate, latency, high-speed mobility and energy efficiency, and diversity and complexity of services in future life, the International Standards Organization of 3rd Generation Partnership Project (3GPP) began to research and develop 5-Generation mobile communication technology (5G). In early deployment of New Radio (NR), complete NR coverage is difficult to achieve, and thus typical network coverage is of a mode of wide area coverage of Long Term Evolution (LTE) and island coverage of NR. Moreover, as a large amount of LTE applications are deployed below 6GHz, there are few spectrums below 6 GHz that can be used for 5G. Therefore, application at a spectrum above 6GHz must be researched for NR, however coverage of a high frequency band is limited and signal fading thereof is fast.

In the prior art, uplink coverage is limited as uplink power of a terminal device is limited and frequency of an NR spectrum is relatively high (propagation loss of high frequency is high). To improve the uplink coverage, an LTE spectrum (relatively low frequency) is used as a supplementary uplink spectrum (i.e., there is a supplementary uplink carrier), which can improve the uplink coverage.

However, in a scenario with the supplementary uplink (SUL), as there is no bandwidth configuration information in SUL configuration information, similarly, in a normal NR cell, a UE only acquires frequency information of the cell from a cell search and there is no information about a downlink bandwidth of the cell.

Moreover, in a current frequency band configuration, there may be an overlap of frequency ranges between two frequency bands, that is, one frequency corresponds to multiple frequency bands, while a terminal device may only support one of the multiple frequency bands. For example, the terminal device does not support a frequency band in which a frequency of the NR cell is located, but supports another frequency band in which the frequency band is located. In other words, a network device does not know a spectrum range supported by the terminal device, thus, if scheduling of the terminal device by the network device exceeds the frequency range supported by the terminal device, data transmission and reception will fail.

Related technologies are known from US 2013/053103A, PANASONIC: "On default bandwidth part", 3GPP Draft, R1-1710787, 15 June 2017, and US 2011/122801A1.

### Summary

The present invention defines a method for random access performed by a terminal device according to independent claim 1, a method for random access performed by a network device according to independent claim 3, a terminal device according to independent claim 5 and a network device according to independent claim 6. Preferred embodiments are defined in the dependent claims.

### Brief Description of Drawings

FIG. 1 is an example of an application scenario of the present disclosure.
FIG. 2 is a schematic flowchart of a method for random access according to an implementation of the present disclosure.
FIG. 3 is a schematic flowchart of a method for reporting a spectrum according to an implementation of the present disclosure.
FIG. 4 is a schematic block diagram of a terminal device according to an implementation of the present disclosure.
FIG. 5 is a schematic block diagram of another terminal device according to an implementation of the present disclosure.
FIG. 6 is a schematic block diagram of a network device according to an implementation of the present disclosure.
FIG. 7 is a schematic block diagram of another network device according to an implementation of the present disclosure.

### Detailed Description

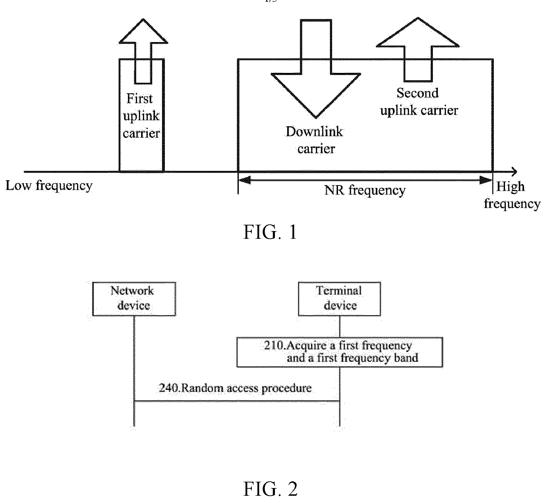

FIG. 1 is an example of an application scenario according to an implementation of the present disclosure.

As shown in FIG. 1, a terminal device may have one downlink carrier and two uplink carriers (as shown in FIG. 1, a first uplink carrier and a second uplink carrier). Specifically, the first uplink carrier and the downlink carrier may be carriers in a high frequency band of New Radio (NR), and the second uplink carrier may be a carrier in a low frequency band of Long Term Evolution (LTE). It should be understood that it is only illustrative description that the terminal device shown in FIG. 1 has two uplink carriers, implementations of the present disclosure are not specifically limited thereto. For example, the terminal device may support three uplink carriers, etc.

It should be understood that the purpose for introducing the second uplink carrier is to improve uplink coverage of the high frequency band of NR.

Specifically, uplink coverage of NR may be limited as uplink power of the terminal device is limited and frequency of an NR spectrum is relatively high (propagation loss of high frequency is high). To improve the uplink coverage, an implementation of the present disclosure provides a method for random access, which can improve an effect of the uplink coverage by using an LTE spectrum (relatively low frequency) as a supplementary uplink carrier.

For example, a combination of the first uplink carrier and the second uplink carrier may be similar to carrier aggregation (CA) in LTE, except for no paired downlink carrier. That is, from a perspective of a band combination, the second uplink carrier is a cell with only an uplink and no paired downlink, but the uplink of the cell is controlled by a certain downlink carrier, i.e., when the second uplink carrier is configured, the second uplink carrier is a secondary serving cell (SCell) without downlink, and control for the second uplink carrier depends on a primary serving cell (PCell).

It should be understood that implementations of the present disclosure may be applied to any communication system including multiple uplinks. For example, a first communication system and a second communication system may be various communication systems, such as a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, LTE Time Division Duplex (TDD), a Universal Mobile Telecommunication System (UMTS).

In addition, various implementations are described in combination with network devices (a first network device to a fourth network device) and a terminal device in the present disclosure.

Herein, the network device may refer to any entity for sending or receiving signals at a network side. For example, the network device may be a user equipment for Machine Type Communication (MTC), a Base Transceiver Station (BTS) in GSM or CDMA, a NodeB in WCDMA, an Evolution Node B (eNB or eNodeB) in LTE, a base station device in a 5G network.

The terminal device may be any terminal device. Specifically, the terminal device may communicate with one or more core networks through a radio access network (RAN), and may also be referred to as an access terminal, a User Equipment (UE), a subscriber unit, a subscriber station, a mobile station, a remote station, a remote terminal, a mobile device, a user terminal, a terminal, a wireless communication device, a user agent, or a user device. For example, the terminal device may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network or the like.

In combination with a random access procedure, it can be found that, as there is no bandwidth configuration information in SUL configuration information, similarly, in a normal NR cell, a UE only acquires frequency information of the cell from a cell search and there is no information about a downlink bandwidth of the cell.

Moreover, in a current frequency band configuration, there may be an overlap of frequency ranges between two frequency bands, that is, one frequency corresponds to multiple frequency bands, while a terminal device may only support one of the multiple frequency bands. For example, the terminal device does not support a frequency band in which a frequency of the NR cell is located, but supports another frequency band in which the frequency band is located. In other words, the network device does not know a spectrum range supported by the terminal device. Thus, if scheduling of the terminal device by the network device exceeds the frequency range supported by the terminal device, data transmission and reception will fail.

Therefore, in an implementation of the present disclosure, a method for random access and a method for reporting a spectrum are proposed, so that a network device can know a frequency band or a spectrum range supported by a terminal device, thereby improving an accuracy of allocating a resource to the terminal device by the network device.

Random access according to an implementation of the present disclosure will be described below with reference to FIG. 2.

In 210, a terminal device acquires a first frequency and a first frequency band.

In 220, the terminal device initiates a random access procedure to the network device.

Specifically, the terminal device acquires the first frequency through a cell search; the terminal acquires the first frequency band supported by the network device through a system broadcast message; the terminal device determines a second frequency band supported by the terminal device among multiple frequency bands corresponding to the first frequency; when determining that the first frequency band and the second frequency band are the same frequency band, the terminal device initiates the random access procedure. Correspondingly, the network device sends the first frequency band supported by the network device to the terminal device through system broadcast, and responds to the random access procedure initiated by the terminal device.

More specifically, for the terminal device, if the terminal device supports the first frequency band, the terminal device normally initiates the random access procedure.

For example, the network device sends a frequency band 1 supported by the network device to the terminal device through system broadcast. If the terminal device supports the frequency band 1, the terminal device normally initiates the random access procedure. In this situation, the network device schedules the terminal device on the frequency band 1 which does not exceed a frequency range supported by the terminal device.

However, if the terminal device does not support the first frequency band, and if the terminal device does not report this situation to the network device, the network device is likely to schedule the terminal device on the first frequency band, which causes that the scheduling of the terminal device by the network device exceeds the frequency range supported by the terminal device, thereby leading to a data transmission and reception failure.

In an implementation of the present disclosure, to solve the above-mentioned problem, the terminal device indicates to the network device a schedulable spectrum range of the terminal device or directly indicates the spectrum range through the indication information.

Specifically, when the first frequency band and the second frequency band are different frequency bands, the terminal device generates indication information, wherein the indication information is used for the network device to determine a schedulable spectrum range of the terminal device or the indication information is used for indicating the spectrum range. The terminal device sends the indication information to the network device. For the network device, the network device receives the indication information sent by the terminal device, and responds to the random access procedure according to the spectrum range.

In the implementation of the present disclosure, when the first frequency band and the second frequency band are different frequency bands, the terminal device reports the indication information to the network device such that the network device can accurately determine the schedulable spectrum range of the terminal device, thereby improving an accuracy of scheduling the terminal device by the network device.

It should be understood that the indication information in the implementation of the present disclosure is intended to let the network device know the spectrum range supported by the terminal device, and a specific form of the indication information is not limited by the implementation of the present disclosure.

For example, the indication information may be more specifically used for indicating that a frequency band supported by the terminal device is the second frequency band. Specifically, the terminal device may indicate to the network device a schedulable bandwidth range of the terminal device within the cell in a message (MSG3) of the random access procedure.

For another example, the indication information may be directly used for indicating the spectrum range, and further, the spectrum range is a range formed by an overlapping spectrum of the first frequency band and the second frequency band.

An implementation in which the terminal device sends the indication information to the network device in the implementation of the present disclosure is described below.

In an implementation, the terminal device may implicitly indicate to the network device.

For example, before generating the indication information, the terminal device receives first mapping relation information sent by the network device, wherein the first mapping relation information includes a corresponding relationship between the multiple frequency bands and multiple resources, and each of the multiple resources includes a preamble code and/or a physical random access channel (PRACH) resource. Therefore, when a frequency band supported by the terminal device is the second frequency band, the terminal device may determine a first resource corresponding to the second frequency band according to the second frequency band and the first mapping relation information. Thus, the terminal device initiates a random access procedure through the first resource and indicates that the frequency band supported by the terminal device is the second frequency band through the first resource.

For the network device, the network device determines the first resource used when the terminal device initiates the random access procedure; and the network device determines the second frequency band corresponding to the first resource as the frequency band supported by the terminal device according to the first mapping relation information.

Specifically, the terminal device may indicate the frequency band supported by the terminal device to the network device in a message (MSG3) of the random access procedure.

For another example, the terminal device receives second mapping relation information sent by the network device, wherein the second mapping relation information includes a corresponding relationship between multiple indexes and the multiple frequency bands, and the multiple indexes are different from each other. Therefore, when a frequency band supported by the terminal device is the second frequency band, the terminal device may determine a first index corresponding to the second frequency band according to the second frequency band and the second mapping relation information. Thus, the terminal device sends the first index to the network device, and the first index is used for indicating that a frequency band supported by the terminal device is the second frequency band.

For the network device, the network device receives the first index sent by the terminal device; and determines the second frequency band corresponding to the first index as the frequency band supported by the terminal device according to the second mapping relation information and the first index.

Specifically, the terminal device may indicate the frequency band supported by the terminal device to the network device in a message (MSG3) of the random access procedure.

In another implementation, the terminal device may explicitly indicate to the network device.

For example, the terminal device sends a Radio Resource Control (RRC) message to the network, wherein the RRC message includes the indication information.

It should be understood that in the implementation of the present disclosure, the above-mentioned terminal device sends the indication information to the network device. A form of the indication information is described exemplarily, which is not limited by the implementations of the present disclosure.

For example, the indication information may be used for indicating a frequency band not supported by the terminal device.

For example, in the implementation of the present disclosure, the first frequency corresponds to a frequency band 1 and a frequency band 2, a frequency band supported by the network device is the frequency band 1, and a frequency band supported by the terminal device is the frequency band 2. Then, the terminal device may indicate that the frequency band supported by the terminal device is the frequency band 2, or the terminal device may indicate that the frequency band not supported by the terminal device is the frequency band 1.

After receiving the indication information, the network device may determine a schedulable spectrum range of the terminal device according to the frequency band 1 and the frequency band 2 corresponding to the first frequency, and the indication information.

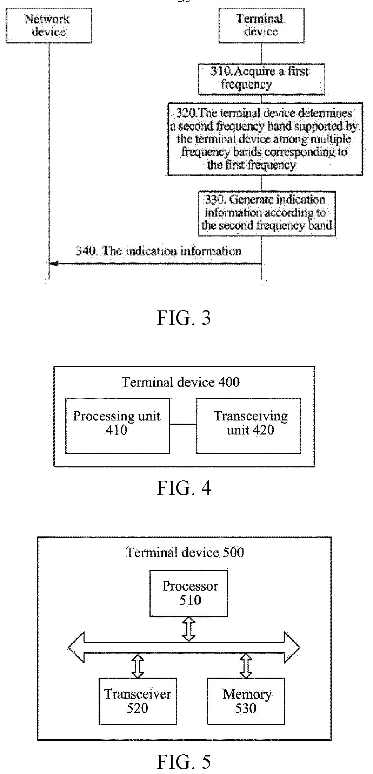

FIG. 3 is a schematic flowchart of a method for reporting a spectrum according to an implementation of the present disclosure.

As shown in FIG. 3, the method includes acts 310 to 340.

In 310, a terminal device acquires a first frequency.

In 320, the terminal device determines a second frequency band supported by the terminal device among multiple frequency bands corresponding to the first frequency.

In 330, the terminal device generates indication information according to the second frequency band.

In 340, the terminal device sends indication information to a network device.

Specifically, the terminal device acquires the first frequency through a cell search; the terminal device determines the second frequency band supported by the terminal device among the multiple frequency bands corresponding to the first frequency; the terminal device generates the indication information according to the second frequency band, wherein the indication information is used for the network device to determine a schedulable spectrum range of the terminal device, or the indication information is used for indicating the spectrum range; and the terminal device sends the indication information to the network device. In other words, the network device receives the indication information sent by the terminal device and determines the spectrum range according to the indication information.

Furthermore, the indication information is more specifically used for indicating that a frequency band supported by the terminal device is the second frequency band.

The terminal device initiates a random access procedure to the network device according to the indication information. The network device responds to the random access procedure initiated by the terminal device according to the spectrum range.

FIG. 4 is a schematic block diagram of a terminal device according to an implementation of the present disclosure.

An implementation of the present disclosure provides a terminal device. Specifically, as shown in FIG. 4, the terminal device includes a processing unit 410 and a transceiving unit 420.

The processing unit 410 is configured to acquire a first frequency through a cell search.

The transceiving unit 420 is configured to acquire a first frequency band supported by the network device through a system broadcast message.

The processing unit 410 is further configured to determine a second frequency band supported by the terminal device among multiple frequency bands corresponding to the first frequency; when determining that the first frequency band and the second frequency band are the same frequency band, initiate a random access procedure.

The processing unit 410 is further configured to generate indication information when the first frequency band and the second frequency band are different frequency bands, wherein the indication information is used for the network device to determine a schedulable spectrum range of the terminal device, or the indication information is used for indicating the spectrum range. The transceiving unit 420 is further configured to send the indication information to the network device.

The indication information is more specifically used for indicating that a frequency band supported by the terminal device is the second frequency band.

Optionally, the spectrum range is a range formed by an overlapping spectrum of the first frequency band and the second frequency band.

The transceiving unit 420 is further configured to, before the processing unit 410 generates the indication information, receive first mapping relation information sent by the network device, wherein the first mapping relation information includes a corresponding relationship between the multiple frequency bands and multiple resources, and each of the multiple resources includes a preamble code and/or a physical random access channel (PRACH) resource.

The processing unit 410 is further configured to determine a first resource corresponding to the second frequency band according to the second frequency band and the first mapping relation information; initiate a random access procedure through the first resource and indicate that the frequency band supported by the terminal device is the second frequency band through the first resource by the terminal device.

Optionally, the transceiving unit 420 is further configured to, before the processing unit 410 generates the indication information, receive second mapping relation information sent by the network device, wherein the second mapping relation information includes a corresponding relationship between multiple indexes and the multiple frequency bands, and the multiple indexes are different from each other. The processing unit 410 is further configured to 17 determine a first index corresponding to the second frequency band according to the second frequency band and the second mapping relation information. The transceiving unit 420 is further configured to send the first index to the network device, wherein the first index is used for indicating that a channel supported by the terminal device is the second frequency band.

Optionally, the transceiving unit 420 is specifically configured to send a Radio Resource Control (RRC) message to the network device, wherein the RRC message includes the indication information.

Another terminal device is provided by an implementation of the present disclosure. Specifically, as shown in FIG. 4, the terminal device includes a processing unit 410 and a transceiving unit 420.

The processing unit 410 is configured to acquire a first frequency through a cell search; determine a second frequency band supported by the terminal device among multiple frequency bands corresponding to the first frequency; generate indication information according to the second frequency band, wherein the indication information is used for a network device to determine a schedulable spectrum range of the terminal device, or the indication information is used for indicating the spectrum range.

The transceiving unit 420 is configured to send the indication information to the network device.

The indication information is more specifically used for indicating that a frequency band supported by the terminal device is the second frequency band.

The processing unit 410 is further configured to initiate a random access procedure to the network device according to the indication information.

It should be noted that the processing unit 410 may be implemented by a processor, and the transceiving unit 420 may be implemented by a transceiver. As shown in FIG. 5, a terminal device 500 may include a processor 510, a transceiver 520, and a memory 530. Herein, the memory 530 may be used for storing indication information, or may be used for storing codes, instructions or the like to be executed by the processor 510. Various components in the terminal device 500 are connected by a bus system. Herein, the bus system includes a power bus, a control bus and a status signal bus in addition to a data bus.

The terminal device 500 shown in FIG. 5 can implement various processes implemented by the terminal device in the method implementations of FIG. 2 and FIG. 3 described above. In order to avoid duplication, the details will not be repeated here.

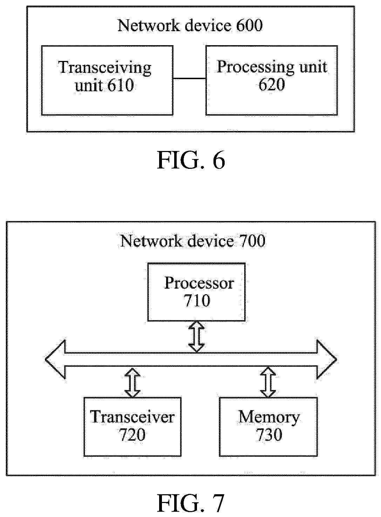

FIG. 6 is a schematic block diagram of a network device according to an implementation of the present disclosure.

An implementation of the present disclosure provides a network device. Specifically, as shown in FIG. 6, the network device includes a transceiving unit 610 and a processing unit 620.

The transceiving unit 610 is configured to send a first frequency band supported by the network device to a terminal device through system broadcast.

The processing unit 620 is configured to respond to a random access procedure initiated by the terminal device.

The transceiving unit 610 is further configured to receive indication information sent by the terminal device, wherein the indication information is used for the network device to determine a schedulable spectrum range of the terminal device, or the indication information is used for indicating the spectrum range. Herein, the processing unit 620 is specifically configured to response to the random access procedure according to the spectrum range.

The indication information is more specifically used for indicating that a frequency band supported by the terminal device is the second frequency band.

Optionally, the spectrum range is a range formed by an overlapping spectrum of the first frequency band and the second frequency band.

The transceiving unit 610 is specifically configured to, before receiving the indication information sent by the terminal device, send first mapping relation information to the terminal device, wherein the first mapping relation information includes a corresponding relationship between the multiple frequency bands and multiple resources, and each of the multiple resources includes a preamble code and/or a physical random access channel (PRACH) resource; determine a first resource used when the terminal device initiates the random access procedure; and determine a second frequency band corresponding to the first resource as the frequency band supported by the terminal device according to the first mapping relation information.

Optionally, the transceiving unit 610 is specifically configured to, before receiving the indication information sent by the terminal device, send second mapping relation information to the terminal device, wherein the second mapping relation information includes a corresponding relationship between multiple indexes and the multiple frequency bands, and the multiple indexes are different from each other; receive a first index sent by the terminal device; and determine a second frequency band corresponding to the first index as the frequency band supported by the terminal device according to the second mapping relation information and the first index.

Optionally, the transceiving unit 610 is more specifically configured to receive a Radio Resource Control (RRC) message sent by the terminal device, wherein the RRC message includes the indication information.

Another network device is provided by the implementation of the present disclosure. Specifically, as shown in FIG. 6, the network device includes a transceiving unit 610 and a processing unit 620.

The transceiving unit 610 is configured to receive indication information sent by a terminal device, wherein the indication information is used for the network device to determine a schedulable spectrum range of the terminal device, or the indication information is used for indicating the spectrum rang.

The processing unit 620 is configured to determine the spectrum range according to the indication information.

The indication information is more specifically used for indicating that a frequency band supported by the terminal device is a second frequency band.

The processing unit 620 is further configured to response to a random access procedure initiated by the terminal device according to the spectrum range.

It should be noted that the transceiving unit 610 may be implemented by a transceiver, and the processing unit 620 may be implemented by a processor. As shown in FIG. 7, a network device 700 may include a processor 710, a transceiver 720, and a memory 730. Herein, the memory 730 may be used for storing indication information, or may be used for storing codes, instructions or the like to be executed by the processor 710. Various components in the network device 700 are connected by a bus system. The bus system includes a power bus, a control bus and a status signal bus in addition to a data bus.

The network device 700 shown in FIG. 7 may implement various processes implemented by the network device in the method implementations of FIG. 2 and FIG. 3 described above. In order to avoid duplication, the details will not be repeated here.

It should be noted that the method implementations of the implementations of the present disclosure may be applied to the processor or be implemented by the processor.

In the implementation process, various acts of the method implementations in the implementations of the present disclosure may be completed by an integrated logic circuit of hardware in the processor or an instruction in the form of software. More specifically, the acts of the method disclosed in connection with the implementations of the present disclosure may be directly embodied as completion through the execution of a hardware decoding processor or completion through the execution in the combination of hardware in the decoding processor and software modules. Software modules may be located in a mature storage medium in the art, such as, a random access memory (RAM), a flash memory, a read-only memory, a programmable read-only memory, an electrical erasable programmable memory, or a register. The storage medium is located in the memory, and the processor reads information in the memory and completes the acts of the above methods in combination with its hardware.

Herein, the processor may be an integrated circuit chip with a capability for processing signals, and may perform or implement various methods, acts and logic block diagrams disclosed in the implementations of the present disclosure. For example, the above processor may be a general purpose processor, a digital signal processor (DSP), an application specific integrated circuit (ASIC), a field programmable gate array (FPGA) or other programmable logic devices, a transistor logic device, or a discrete hardware component, or the like. Furthermore, the general purpose processor may be a microprocessor or the processor may be any conventional processor or the like.

In addition, the memory in implementations of the present disclosure may be a transitory memory or non-transitory memory, or may include both the transitory memory and the non-transitory memory. The non-transitory memory may be a read-only memory (ROM), a programmable ROM (PROM), an erasable PROM (EPROM), an electrically erasable EPROM (EEPROM), or a flash memory. The transitory memory may be a Random Access Memory (RAM) which serves as an external cache. It should be understood that, the foregoing memory is an example for illustration and should not be construed as limiting. For example, optionally, the memory in the implementations of the present disclosure may be a Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Direct Rambus RAM (DR RAM), or the like. That is, memories in the systems and methods described herein are intended to include, but are not limited to, these and any other suitable types of memories.

Finally, it should be noted that terms used in the implementations of the present disclosure and appended claims are for a purpose of describing specific implementations only and are not intended to limit the implementations of the present disclosure.

For example, a singular form of "a", "said", and "the" used in the implementations of the present disclosure and the appended claims are also intended to include a plural form unless a context clearly indicates other meanings.

For another example, depending on the context, a phase "when" as used herein may be interpreted as "if' or "whether" or "while" or "in response to a determination" or "in response to a detection". Similarly, depending on the context, a phrase "if determining" or "if detecting (a stated condition or event)" may be interpreted as "when ... is determined" or "in response to a determination" or "when (a stated condition or event) is detected" or "in response to a detection of (stated condition or event)".

Those of ordinary skill in the art will recognize that the exemplary elements and algorithm acts described in combination with the implementations disclosed herein can be implemented in electronic hardware, or a combination of computer software and electronic hardware. Whether these functions are implemented in hardware or software depends on the specific application and design constraints of the technical solution. One skilled in the art may use different methods to implement the described functions for each specific application, but such implementation should not be considered to be beyond the scope of implementations of the present disclosure.

Those skilled in the art may clearly understand that for convenience and conciseness of description, the specific working processes of the systems, apparatuses and units described above may refer to the corresponding processes in the method implementations and will not be described here.

In several implementations provided by the present disclosure, it should be understood that the disclosed systems, devices and methods may be implemented in other ways. For example, the device implementations described above are only illustrative, for example, the division of the units is only a logical function division, and there may be other division modes in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, apparatuses or units, and may be in electrical, mechanical or other forms.

The units described as separate components may or may not be physically separated, and the component shown as a unit may or may not be a physical unit, i.e., it may be located in one place or may be distributed over multiple network units. Parts or all of the units can be selected according to actual needs to achieve the purpose of the implementations of the present disclosure.

In addition, various functional units in the implementations of the present disclosure may be integrated in one processing unit, or various units may be presented separately in a physical way, or two or more units may be integrated in one unit.

The function units may be stored in a computer readable storage medium if realized in a form of software functional units and sold or used as a separate product. Based on this understanding, the technical solutions of the implementations of the present disclosure, in essence, or the part contributing to the related art, or the part of the technical solutions, may be embodied in the form of a software product stored in a storage medium, including several instructions for causing a computer device (which may be a personal computer, a server, or a network device, etc.) to perform all or parts of the acts of the methods described in various implementations of the present disclosure. The aforementioned storage medium includes a medium capable of storing program codes, such as, a U disk, a mobile hard disk, a read-only memory (ROM), a random access memory, a magnetic disk or an optical disk, etc.

What are described above are merely the specific implementations of the implementations of the present disclosure, but the protection scope of the implementations of the present disclosure is not limited thereto. The scope of protection of the implementations of the present disclosure is exclusively defined by the appended claims.

## Claims

1. A method for random access, comprising:
acquiring (310), by a terminal device, a first frequency information through a cell search;
acquiring, by the terminal device, a first frequency band supported by a network device through a system broadcast message;
determining (320) by the terminal device, a second frequency band supported by the terminal device among a plurality of frequency bands corresponding to the first frequency; and
initiating (220), by the terminal device, a random access procedure when determining the first frequency band and the second frequency band are the same frequency band;
generating (330), by the terminal device, indication information when the first frequency band and the second frequency band are different frequency bands, wherein the indication information is used for the network device to determine a schedulable spectrum range of the terminal device, or the indication information is used for indicating the spectrum range; and
sending (340), by the terminal device, the indication information to the network device;
wherein before generating, by the terminal device, the indication information, the method further comprises:
receiving, by the terminal device, first mapping relation information sent by the network device, wherein the first mapping relation information comprises a corresponding relationship between the plurality of frequency bands and a plurality of resources, and each of the plurality of resources comprises a preamble code and/or a physical random access channel, PRACH, resource; and
determining, by the terminal device, a first resource corresponding to the second frequency band according to the second frequency band and the first mapping relation information;
wherein sending, by the terminal device, the indication information to the network device comprises:
initiating, by the terminal device, the random access procedure through the first resource and indicating, through the first resource, that a frequency band supported by the terminal device is the second frequency band.

2. The method of claim 1, wherein sending, by the terminal device, the indication information to the network device comprises:
sending, by the terminal device, a media access control, RRC, message to the network, wherein the RRC message comprises the indication information.

3. A method for random access, comprising:
sending (610), by a network device, a first frequency band supported by the network device to a terminal device through system broadcast; and
responding (620), by the network device, to a random access procedure initiated by the terminal device;
receiving, by the network device, indication information sent by the terminal device, wherein the indication information is used for the network device to determine a schedulable spectrum range of the terminal device, or the indication information is used for indicating the spectrum range;
wherein, responding, by the network device, to the random access procedure initiated by the terminal device comprises:
responding, by the network device, to the random access procedure according to the spectrum range;
wherein before receiving, by the network device, the indication information sent by the terminal device, the method further comprises:
sending, by the network device, first mapping relation information to the terminal device, wherein the first mapping relation information comprises a corresponding relationship between a plurality of frequency bands and a plurality of resources, and each of the plurality of resources comprises a preamble code and/or a physical random access channel, PRACH, resource;
wherein receiving, by the network device, the indication information sent by the terminal device comprises:
determining, by the network device, a first resource used when the terminal device initiates the random access procedure; and
determining, by the network device, a second frequency band corresponding to the first resource as a frequency band supported by the terminal device according to the first mapping relation information.

4. The method of claim 3, wherein receiving, by the network device, the indication information sent by the terminal device comprises:
receiving, by the network device, a media access control, RRC, message sent by the terminal device, wherein the RRC message comprises the indication information.

5. A terminal device, comprising means configured to implement the method of any one of claims 1-2.

6. A network device, comprising means configured to implement the method of any one of claims 3-4.

## Patentansprüche

1. Direktzugriffsverfahren, umfassend:
Erfassen (310), durch eine Endgerätevorrichtung, einer ersten Frequenzinformation durch eine Zellensuche;
Erfassen, durch die Endgerätevorrichtung, eines ersten Frequenzbandes, das von einer Netzwerkvorrichtung unterstützt wird, durch eine System-Broadcast-Nachricht;
Bestimmen (320), durch die Endgerätevorrichtung, eines zweiten Frequenzbandes, das von der Endgerätevorrichtung unterstützt wird, unter mehreren Frequenzbändern, die der ersten Frequenz entsprechen; und
Initiieren (220), durch die Endgerätevorrichtung, eines Direktzugriffsvorgangs, wenn bestimmt wird, dass das erste Frequenzband und das zweite Frequenzband das gleiche Frequenzband sind;
Erzeugen (330), durch die Endgerätevorrichtung, einer Angabeinformation, wenn das erste Frequenzband und das zweite Frequenzband unterschiedliche Frequenzbänder sind, wobei die Angabeinformation für die Netzwerkvorrichtung verwendet wird, um einen planbaren Spektralbereich der Endgerätevorrichtung zu bestimmen, oder die Angabeinformation zum Angeben des Spektralbereichs verwendet wird; und
Senden (340), durch die Endgerätevorrichtung, der Angabeinformation an die Netzwerkvorrichtung;
wobei das Verfahren vor dem Erzeugen, durch die Endgerätevorrichtung, der Angabeinformation ferner umfasst:
Empfangen, durch die Endgerätevorrichtung, einer ersten Mapping-Beziehung-Information, die von der Netzwerkvorrichtung gesendet wurde, wobei die erste Mapping-Beziehung-Information eine entsprechende Beziehung zwischen den mehreren Frequenzbändern und mehreren Ressourcen umfasst, und jede der mehreren Ressourcen einen Präambelcode und/oder eine physikalische Direktzugriffskanal-, PRACH-, Ressource umfasst; und
Bestimmen, durch die Endgerätevorrichtung, einer ersten Ressource, die dem zweiten Frequenzband entspricht, gemäß dem zweiten Frequenzband und der ersten Mapping-Beziehungsinformation;
wobei das Senden, durch die Endgerätevorrichtung, der Angabeinformation an die Netzwerkvorrichtung umfasst:
Initiieren, durch die Endgerätevorrichtung, des Direktzugriffsvorgangs durch die erste Ressource und Angeben, durch die erste Ressource, dass ein von der Endgerätevorrichtung unterstütztes Frequenzband das zweite Frequenzband ist.

2. Verfahren nach Anspruch 1, wobei das Senden, durch die Endgerätevorrichtung, der Angabeinformation an die Netzwerkvorrichtung umfasst:
Senden, durch die Endgerätevorrichtung, einer Medienzugriffssteuerungs-, RRC-, Nachricht an das Netzwerk wobei die RRC-Nachricht die Angabeinformation umfasst.

3. Direktzugriffsverfahren, umfassend:
Senden (610), durch eine Netzwerkvorrichtung, eines ersten Frequenzbandes, das von der Netzwerkvorrichtung unterstützt wird, an ein Endgerätevorrichtung durch System-Broadcast; und
Reagieren (620), durch die Netzwerkvorrichtung, auf einen durch die Endgerätevorrichtung initiierten Direktzugriffsvorgang;
Empfangen, durch die Netzwerkvorrichtung, einer von der Endgerätevorrichtung gesendeten Angabeinformation, wobei die Angabeinformation für die Netzwerkvorrichtung verwendet wird, um einen planbaren Spektralbereich der Endgerätevorrichtung zu bestimmen, oder die Angabeinformation zum Angeben des Spektralbereichs verwendet wird;
wobei das Reagieren, durch die Netzwerkvorrichtung, auf einen durch die Endgerätevorrichtung initiierten Direktzugriffsvorgang umfasst:
Reagieren, durch die Netzwerkvorrichtung, auf den Direktzugriffsvorgang gemäß dem Spektralbereich;
wobei das Verfahren vor dem Empfangen, durch die Netzwerkvorrichtung, der von der Endgerätevorrichtung gesendeten Angabeinformation ferner umfasst:
Senden, durch die Netzwerkvorrichtung, einer ersten Mapping-Beziehungsinformation an die Endgerätevorrichtung, wobei die erste Mapping-Beziehungsinformation eine entsprechende Beziehung zwischen mehreren Frequenzbändern und mehreren Ressourcen umfasst, und jede der mehreren Ressourcen einen Präambelcode und/oder eine physikalische Direktzugriffskanal-, PRACH-, Ressource umfasst;
wobei das Empfangen, durch die Netzwerkvorrichtung, der von der Endgerätevorrichtung gesendeten Angabeinformation umfasst:
Bestimmen, durch die Netzwerkvorrichtung, einer ersten Ressource, die verwendet wird, wenn die Endgerätevorrichtung den Zufallszugriffsvorgang initiiert; und
Bestimmen, durch die Netzwerkvorrichtung, eines zweiten Frequenzbandes, das der ersten Ressource entspricht, als ein Frequenzband, das von der Endgerätevorrichtung gemäß der ersten Mapping-Beziehungsinformation unterstützt wird.

4. Verfahren nach Anspruch 3, wobei das Empfangen durch die Netzwerkvorrichtung der durch die Endgerätevorrichtung gesendeten Angabeinformation umfasst:
Empfangen, durch die Netzwerkvorrichtung, einer durch die Endgerätevorrichtung gesendeten Medienzugriffssteuerungs-, RRC-, Nachricht, wobei die RRC-Nachricht die Angabeinformation umfasst.

5. Endgerätevorrichtung, umfassend Mittel, die dazu ausgelegt sind, das Verfahren nach einem der Ansprüche 1-2 zu implementieren.

6. Netzwerkvorrichtung, umfassend Mittel, die dazu ausgelegt sind, das Verfahren nach einem der Ansprüche 3-4 zu implementieren.

## Revendications

1. Procédé d'accès aléatoire, comprenant les étapes consistant à :
acquérir (310), par un dispositif terminal, une première information de fréquence par l'intermédiaire d'une recherche de cellule ;
acquérir, par le dispositif terminal, une première bande de fréquences prise en charge par un dispositif de réseau par l'intermédiaire d'un message de diffusion de système ;
déterminer (320), par le dispositif terminal, une seconde bande de fréquences prise en charge par le dispositif terminal parmi une pluralité de bandes de fréquences qui correspondent à la première fréquence ; et
lancer (220), par le dispositif terminal, une procédure d'accès aléatoire quand il est déterminé que la première bande de fréquences et la seconde bande de fréquences sont la même bande de fréquences ;
générer (330), par le dispositif terminal, une information d'indication quand la première bande de fréquences et la seconde bande de fréquences sont des bandes de fréquences différentes, l'information d'indication étant utilisée pour que le dispositif de réseau détermine une plage spectrale planifiable du dispositif terminal ou bien l'information d'indication étant utilisée pour indiquer la plage spectrale ; et
envoyer (340), par le dispositif de terminal, l'information d'indication au dispositif de réseau ;
le procédé comprenant en outre, avant la génération, par le dispositif terminal, de l'information d'indication, les étapes consistant à :
recevoir, par le dispositif terminal, une première information de relation de concordance envoyée par le dispositif de réseau, la première information de relation de concordance comprenant une relation correspondante entre la pluralité de bandes de fréquences et une pluralité de ressources et chaque ressource de la pluralité de ressources comprenant un code de préambule et/ou une ressource de canal physique d'accès aléatoire (PRACH) ; et
déterminer, par le dispositif terminal, une première ressource qui correspond à la seconde bande de fréquences selon la seconde bande de fréquences et la première information de relation de concordance ;
l'envoi, par le dispositif de terminal, de l'information d'indication au dispositif de réseau comprenant l'étape consistant à :
lancer, par le dispositif terminal, la procédure d'accès aléatoire par l'intermédiaire de la première ressource et indiquer, par l'intermédiaire de la première ressource, qu'une bande de fréquences prise en charge par le dispositif terminal est la seconde bande de fréquences.

2. Procédé selon la revendication 1, dans lequel l'envoi, par le dispositif terminal, de l'information d'indication au dispositif de réseau comprend l'étape consistant à :
envoyer, par le dispositif terminal, un message de contrôle d'accès au support (RRC) au réseau, le message RRC comprenant l'information d'indication.

3. Procédé d'accès aléatoire, comprenant les étapes consistant à :
envoyer (610), par un dispositif de réseau, une première bande de fréquences prise en charge par le dispositif de réseau à un dispositif terminal par l'intermédiaire d'une diffusion de système ; et
répondre (620), par le dispositif de réseau, à une procédure d'accès aléatoire lancée par le dispositif terminal ;
recevoir, par le dispositif de réseau, une information d'indication envoyée par le dispositif terminal, l'information d'indication étant utilisée pour que le dispositif de réseau détermine une plage spectrale planifiable du dispositif terminal ou bien l'information d'indication étant utilisée pour indiquer la plage spectrale ;
le fait de répondre, par le dispositif de réseau, à la procédure d'accès aléatoire lancée par le dispositif terminal comprenant l'étape consistant à :
répondre, par le dispositif de réseau, à la procédure d'accès aléatoire selon la plage spectrale ;
le procédé comprenant en outre, avant la réception, par le dispositif de réseau, de l'information d'indication envoyée par le dispositif terminal, l'étape consistant à :
envoyer, par le dispositif de réseau, une première information de relation de concordance au dispositif terminal, la première information de relation de concordance comprenant une relation correspondante entre une pluralité de bandes de fréquences et une pluralité de ressources et chaque ressource de la pluralité de ressources comprenant un code de préambule et/ou une ressource de canal physique d'accès aléatoire (PRACH) ;
la réception, par le dispositif de réseau, de l'information d'indication envoyée par le dispositif terminal comprenant les étapes consistant à :
déterminer, par le dispositif de réseau, une première ressource utilisée quand le dispositif terminal lance la procédure d'accès aléatoire ; et
déterminer, par le dispositif de réseau, une seconde bande de fréquences qui correspond à la première ressource en tant que bande de fréquences prise en charge par le dispositif terminal selon la première information de relation de concordance.

4. Procédé selon la revendication 3, dans lequel la réception, par le dispositif de réseau, de l'information d'indication envoyée par le dispositif terminal comprend l'étape consistant à :
recevoir, par le dispositif de réseau, un message de contrôle d'accès au support (RRC) envoyé par le dispositif terminal, le message RRC comprenant l'information d'indication.

5. Dispositif terminal, comprenant un moyen configuré pour mettre en œuvre le procédé selon l'une quelconque des revendications 1 et 2.

6. Dispositif de réseau, comprenant un moyen configuré pour mettre en œuvre le procédé selon l'une quelconque des revendications 3 et 4.
